(19)

**Europäisches Patentamt**
**European Patent Office**
**Office européen des brevets**

(11) **EP 4 629 615 A1**

(12) **EUROPEAN PATENT APPLICATION**

(43) Date of publication:
08.10.2025   Bulletin 2025/41

(21) Application number: 24305505.0

(22) Date of filing: 02.04.2024

(51) International Patent Classification (IPC):
$H04N\ 19/103^{(2014.01)}$   $H04N\ 19/119^{(2014.01)}$
$H04N\ 19/159^{(2014.01)}$   $H04N\ 19/176^{(2014.01)}$
$H04N\ 19/513^{(2014.01)}$   $H04N\ 19/593^{(2014.01)}$

(52) Cooperative Patent Classification (CPC):
H04N 19/103; H04N 19/119; H04N 19/159;
H04N 19/176; H04N 19/521; H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• BORDES, Philippe
  35890 LAILLE (FR)
• RATH, Gagan Bihari
  35000 RENNES (FR)
• CHEN, Ya
  35700 RENNES (FR)
• REUZE, Kevin
  35700 RENNES (FR)

(74) Representative: Interdigital
Immeuble ZEN 2
845 A, avenue des Champs Blancs
35510 Cesson-Sévigné (FR)

(54) **COMBINING THE INTRA SUB-PARTITION (ISP) MODE AND THE COMBINATION INTRA-INTER PARTITION MODE (CIIP)**

(57)     A method comprising:
obtaining (1300, 1400) a target block of a picture and partitioning the target block in a plurality of sub-partitions according to a partitioning direction;
obtaining (1301, 1302, 1501, 1502) an intra prediction mode and a motion information predictor candidate for inter prediction for each sub-partition; and, for each sub-partition:
building (1304) an intra prediction for the sub-partition using the intra prediction mode determined for this sub-partition;
building (1305) an inter prediction for the sub-partition using the motion information predictor candidate determined for this sub-partition; and,
computing (1306) a weighted average between the intra prediction and the inter prediction to generate a predictor for the sub-partition and predicting the sub-partition with the predictor.

```
1300 ─ Obtaining a target block
              │
1301 ─ Determine intra prediction
              mode
              │
1302 ─ Determine inter prediction
              candidate
              │
1303 ─ Refine inter-prediction
              candidate
              │
1304 ─ Builds intra-prediction    1305 ─ Builds inter-prediction
              sub-partition                     sub-partition
              │
1306 ─ Weighted combination of
              the 2 sub-partitions
              │
1307 ─ compute residual
              │
1308 ─ All sub-paritions
              processed ?
              │
1309 ─ End
```

Fig. 13

**Description**

1. TECHNICAL FIELD

At least one of the present embodiments generally relates to a method and a device for combining the intra sub-partition (ISP) mode and the combination intra-inter partition mode (CIIP) on blocks of pictures.

2. BACKGROUND

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

Many coding tools for prediction were proposed in the past. Many of these prediction tools are either pure intra prediction tools or pure inter prediction tools. Intra Sub-Partition (ISP) is an example of pure intra prediction tool. In ISP, a luma intra-predicted block is split vertically or horizontally into several sub-partitions. For example, in ECM, the number of sub-partitions is two or four depending on the block size. Each partition is then predicted with same intra mode, but each partition can use the reconstructed samples of the top or left sub-partition.

Some hybrid mode combining intra and inter prediction were also proposed. This is the case of the combination intra inter partition (CIIP) mode. In CIIP mode, prediction samples of a target block are generated by weighting an inter prediction signal and an intra prediction signal.

As can be seen, the ISP mode uses intra prediction only and does not benefit of any inter-prediction, while it benefits of progressively reconstructed sub-partitions. CIIP benefits of inter prediction, but it does not benefit from progressively reconstructed sub-partitions.

It is desirable to propose solutions allowing to overcome the above issue. In particular, it is desirable to propose methods allowing benefiting jointly of the advantages of the ISP mode and of the advantages of the CIIP mode.

3. BRIEF SUMMARY

In a first aspect, one or more of the present embodiments provide a method comprising:

obtaining a target block of a picture and partitioning the target block in a plurality of sub-partitions according to a partitioning direction;
obtaining an intra prediction mode and a motion information predictor candidate for inter prediction for each sub-partition; and,
for each sub-partition:

building an intra prediction for the sub-partition using the intra prediction mode determined for this sub-partition;
building an inter prediction for the sub-partition using the motion information predictor candidate determined for this sub-partition; and,
computing a weighted average between the intra prediction and the inter prediction to generate a predictor for the sub-partition and predicting the sub-partition with the predictor.

In an embodiment, for at least one sub-partition, the motion information predictor candidate is refined using a template matching based decoding side motion vector refinement process before being used for building the inter prediction.

In an embodiment, the intra prediction mode obtained for at least one sub-partition results from applying at least partially a Template based Intra Mode Derivation process or a Decoder Side Intra mode Derivation process.

In an embodiment, for at least one sub-partition of the target block, the intra prediction of the sub-partition is built using reconstructed samples neighboring the sub-partition of a previous sub-partition of the target block.

In an embodiment, the partitioning direction is derived from the intra prediction mode.

In an embodiment, when applied to a current sub-partition, the template matching based decoding side motion vector refinement process uses a template comprising reconstructed samples neighboring the current sub-partition of the sub-partition of the target block processed before the current sub-partition.

In an embodiment, an index of the intra prediction mode of a current sub-partition of the target block depends on an index of the intra prediction mode of the sub-partition of the target block processed before the current sub-partition.

In an embodiment, responsive to a difference between the index of the intra prediction mode of the current sub-partition of the target block and the index of the intra prediction mode of the sub-partition of the target block processed before the current sub-partition is greater than a value, the index of the intra prediction mode of the current sub-partition is restricted so that the difference is equal to the value.

In a second aspect, one or more of the present embodiments provide a method for encoding a picture comprising the method of the first aspect.

In a third aspect, one or more of the present embodiments provide a method for decoding a picture comprising the method of the first aspect.

In a fourth aspect, one or more of the present embodiments provide a device comprising electronic circuitry configured for:

obtaining a target block of a picture and partitioning the target block in a plurality of sub-partitions according to a partitioning direction;
obtaining an intra prediction mode and a motion information predictor candidate for inter prediction for each sub-partition; and,
for each sub-partition:

building an intra prediction for the sub-partition using the intra prediction mode determined for this sub-partition;
building an inter prediction for the sub-partition using the motion information predictor candidate determined for this sub-partition; and,
computing a weighted average between the intra prediction and the inter prediction to generate a predictor for the sub-partition and predicting the sub-partition with the predictor.

In a fifth aspect, one or more of the present embodiments provide a device comprising electronic circuitry configured for applying the method of the second aspect or the method of third aspect.

In a sixth aspect, one or more of the present embodiments provide a non-transitory information storage medium storing program code instructions for implementing the method according to the first, second or third aspect.

In a seventh aspect, one or more of the present embodiments provide a signal comprising video data generated by the method of the second aspect or by the device of the fifth aspect.

In a eighth aspect, one or more of the present embodiments provide a computer program comprising program code instructions for implementing the method the first, second or third aspect.

4. BRIEF SUMMARY OF THE DRAWINGS

Fig. 1 illustrates schematically a context in which embodiments are implemented;
Fig. 2 illustrates schematically an example of partitioning undergone by a picture of pixels of an original video;
Fig. 3 depicts schematically a method for encoding a video stream;
Fig. 4 depicts schematically a method for decoding an encoded video stream;
Fig. 5A illustrates schematically an example of hardware architecture of a processing module able to implement an encoding module or a decoding module in which various aspects and embodiments are implemented;
Fig. 5B illustrates a block diagram of an example of a first system in which various aspects and embodiments are implemented;
Fig. 5C illustrates a block diagram of an example of a second system in which various aspects and embodiments are implemented;
Fig. 6 illustrates the ISP mode;
Fig. 7 illustrates a generation of an Histogram of Gradient for the DIMD mode;
Fig. 8 represents a process to derive a DIMD predictor;
Fig. 9 illustrates the TIMD mode;
Fig. 10 illustrates a weighting in the CIIP mode;
Figs. 11A and 11B illustrate an example of derivation of a list of merge candidates in the merge mode;
Fig. 12 illustrates schematically a calculation of template matching cost values in an adaptive re-ordering of motion candidates process;
Fig. 13 illustrates schematically a first embodiment of a method for encoding according to a combined CIIP/ISP mode;

Fig. 14 illustrates schematically a first embodiment of a method for decoding according to a combined CIIP/ISP mode;

Fig. 15 illustrates schematically a second and third embodiment of a method for encoding according to a combined CIIP/ISP mode;

Fig. 16 illustrates schematically a second and third embodiment of a method for decoding according to a combined CIIP/ISP mode; and

Fig. 17 illustrates a variant of the third embodiment of a method for encoding or decoding according to a combined CIIP/ISP mode.

## 5. DETAILED DESCRIPTION

The following examples of embodiments are described in the context of a video format similar to ECM as described in document JVET AF2025: Algorithm description of Enhanced Compression Model 11 (ECM 11) / Joint Video Experts Team (JVET) of ITU-T SG 16 WP 3 and ISO/IEC JTC 1/SC 29, 32nd Meeting, Hannover, DE, 13-20 October 2023 just called *JVET-AF2025* in the following. However, these embodiments are not limited to the video coding/decoding method corresponding to ECM. These embodiments are, in particular, adapted to various video formats comprising (and/or derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9.

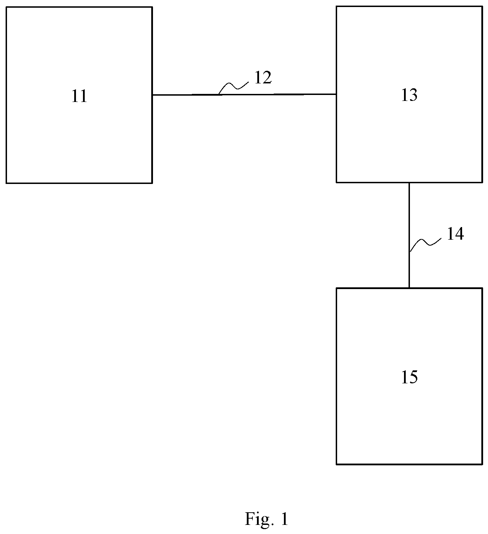

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or SG) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

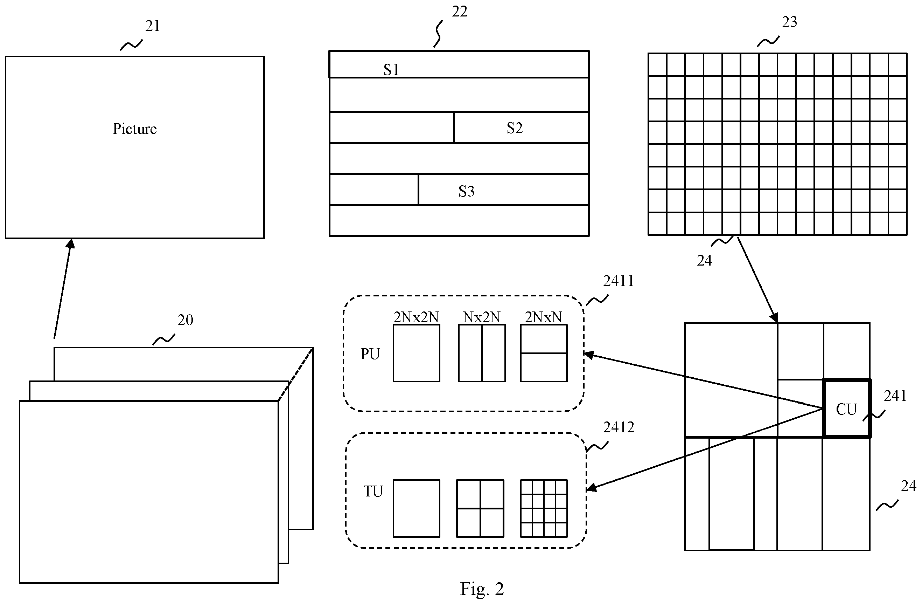

Figs. 2, 3 and 4 introduce an example of video format.

**Fig. 2** illustrates an example of partitioning undergone by a picture of pixels 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks*, each of which consisting of at least one row of CTUs within the tile. Above or besides the concept of tiles and bricks, another encoding entity, called *slice*, exists, that can contain at least one tile of a picture or at least one brick of a tile.

In the example of Fig. 2, as represented by reference 22, the picture 21 is divided into three slices S1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root (*i.e.* the parent node) of the hierarchical tree and can be partitioned in a plurality of CUs (*i.e.* child nodes). Each CU becomes a leaf of the hierarchical tree if it is not further partitioned in smaller CUs, or becomes a parent node of smaller CUs (*i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.*, it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction (*i.e.*, a PU) and transform (*i.e.* a TU) can be different subdivisions of a CU. For example, as represented in Fig. 2, a CU of size $2N \times 2N$, can be divided in PUs 2411 of size $N \times 2N$ or of size $2N \times N$. In addition, said CU can be divided in "4" TUs 2412 of size $N \times N$ or in "16" TUs of size $\left(\frac{N}{2}\right) \times \left(\frac{N}{2}\right)$. The TUs are always of square shapes.

One can note that in VVC, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

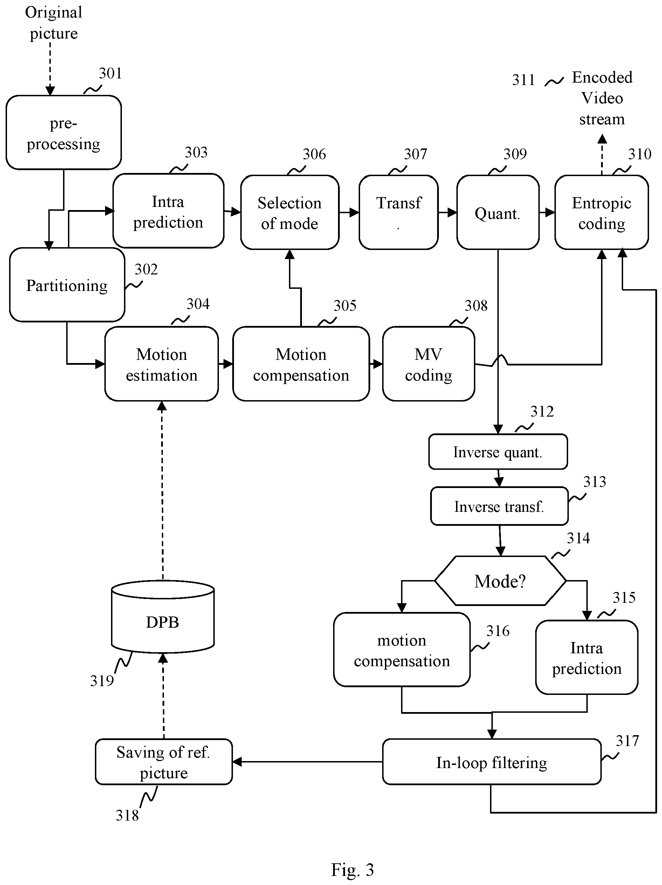

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a pre-processing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components) and/or pre-filtering may be applied to remove temporal noise using motion compensated temporal filtering for example. Pictures obtained by pre-processing are called pre-processed pictures in the following.

The encoding of a pre-processed picture begins with a partitioning of the pre-processed picture during a step 302, as described in relation to Fig. 2. The pre-processed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a target block (i.e. a PU or CU) is spatially predicted from samples of causal (reconstructed) neighbour blocks in the same picture, i.e., the blocks on the top and top-right, the blocks on the left and left-bottom, and the top-left block. The encoder constructs a plurality of predictor blocks for the target block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1") and the remaining "65" are angular modes. The planar and DC modes aim to model slow changing intensity regions whereas the angular modes are designed to model directional structures present in pictures. The best prediction mode is encoded and transmitted to the decoder so that the decoder constructs the same intra predictor block for the target block.

To keep the decoder complexity low, the intra prediction uses generally only one row of reference pixels on top and one column of reference pixels on left of the target block. Though the encoder has the option of choosing among several sets of reference lines in a mode called *multiple reference lines* (MRL), the prediction is based on one reference line that consists of one row on top and one column on left. Because of this limitation, the amount of information contained in the reference pixels is quite limited and thus the intra prediction efficiency, which is based on the correlation between the target block's samples and the reference samples, is also limited. More recently, a proposal for using several (ex: two) adjacent reference lines has been proposed. In this case, the predictor is constructed as a weighted average of the two predictors each based on a single reference line.

Intra Sub-Partition (ISP) proposes another solution for improving the correlations between the prediction samples and the predicted samples. In some implementations of ISP, ISP can only be used on the luma component of a block when a dual tree is used (i.e., when the luma and the chroma use different hierarchical tree decompositions). In ISP on luma, the luma component of an intra predicted block is split vertically or horizontally into sub-partitions. The number of sub-partitions (ex: "2" or "4") may depend on the block size. In some implementations, one syntax element (*ispMode*) is coded with value equal to "0" or "1" to indicate if the partitioning is horizontal or vertical.

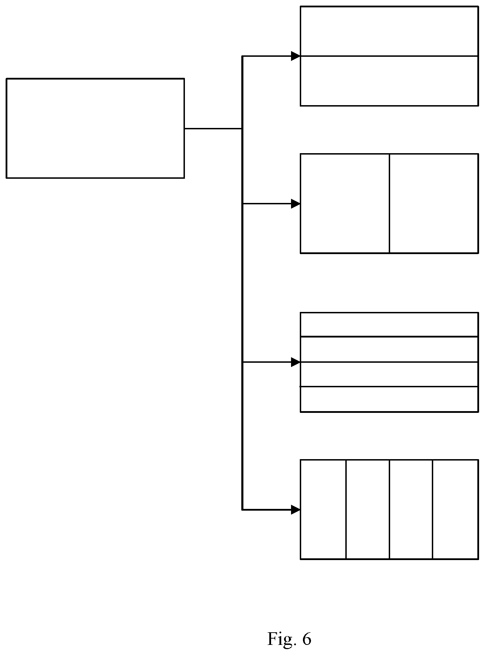

**Fig. 6** illustrates possible partitions in the ISP mode.

Each partition is predicted with a same intra prediction mode, but the prediction of a sub-partition can use (when available) reconstructed samples of the top or left of the sub-partition.

The above intra prediction modes are forward intra prediction tools, that is, the intra prediction methods used at the encoder is explicitly signalled to the decoder. Many tools employing backward estimation (that is, the prediction modes are estimated using already decoded causal samples in a picture) were recently proposed. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. The encoder uses the minimum amount of signalling to indicate which modes are employed and, if necessary, to perform a blending of the multiple predictions corresponding to the multiple prediction modes. The underlying assumption behind these methods is that not all parts of a block have the same directionality and therefore using multiple predictions and then blending those predictions can result in better predictions. Estimating these modes in the backward fashion eliminates the need of transmitting multiple prediction modes that can entail significant overhead. The assumption seems to be reasonable for large blocks as the natural imagery can contain a varying directionality of object structures.

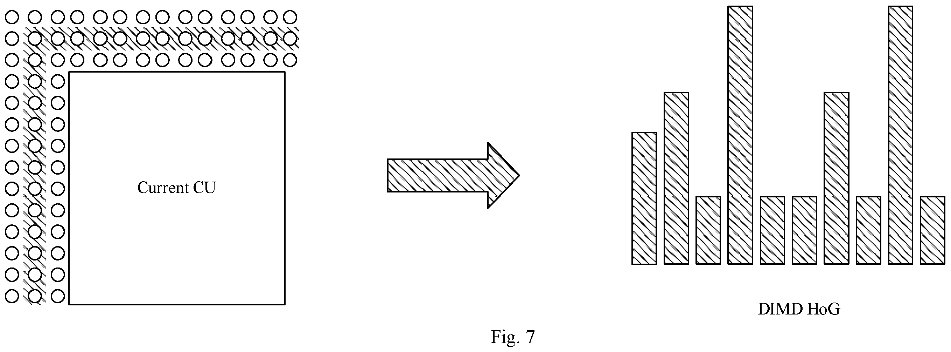

Decoder side Intra Mode Derivation (DIMD) is a new tool to derive an intra prediction mode for coding a target block. DIMD relies on an assumption that reconstructed samples surrounding the target block to be predicted carries information to infer a texture directionality in this target block. When DIMD is applied, up to five angular modes among the "65" angular modes currently considered in intra prediction, that are likely the best angular modes for predicting the target block, are derived from a Histogram of Oriented Gradients (HoG) computed from the neighbouring samples of the target block. The HoG is computed on a three-samples wide/high L-shaped template formed of already reconstructed samples as represented in **Fig. 7.** The predictions with these up to five angular modes are combined (blended) with a planar mode predictor with weights derived from the HoG.

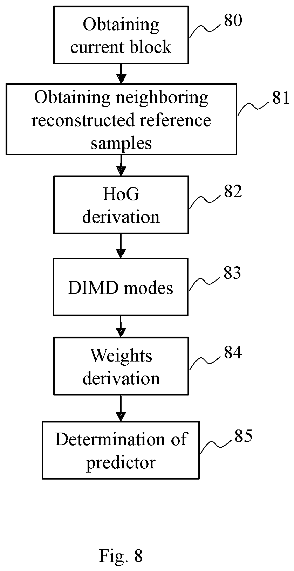

**Fig. 8** represents a process to derive a DIMD predictor.

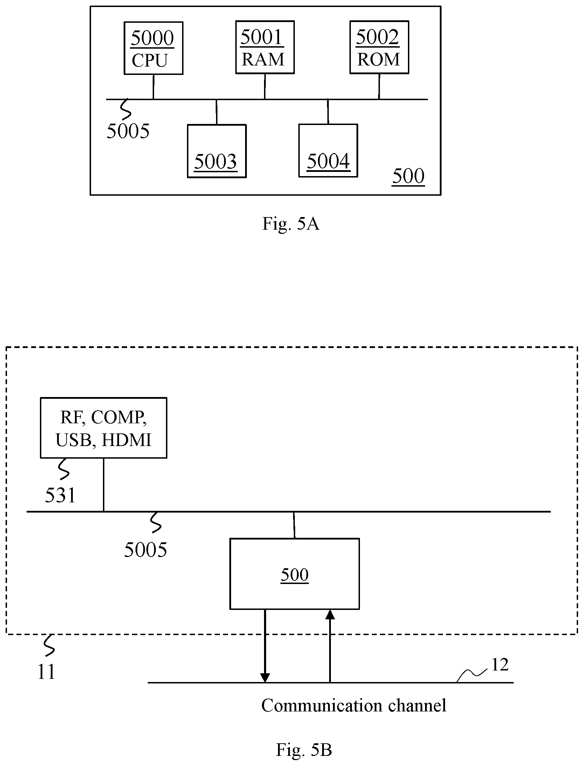

The process of Fig. 8 is applied by a processing module that may be the processing module 500 of Fig. 5A described later.

In a step 80, the processing module obtains a target block.

In a step 81, the processing module obtains a three-samples wide/high L-shaped template formed of already reconstructed samples neighbouring the target block. One can note that the shape of the template may be adaptive depending on samples availability.

In a step 82, the processing module derives the Histogram of Oriented Gradients (HoG) from the samples of the template. The HoG is obtained using a Sobel filter, accumulating the magnitudes of all gradients at a given direction, for all the samples within the dashed region in Fig. 7. The bins of the HoG are mapped to the "65" angular modes used in intra prediction.

In a step 83, the processing module selects up to five angular modes with highest cumulative magnitude in the HoG to obtain DIMD modes.

In a step 84, the processing module determines a weight for each of the selected DIMD mode. Each weight depends on the relative magnitudes of the DIMD modes in the HoG.

In a step 85, the processing module computes a weighted sum of the predictors obtained from each DIMD mode and for the planar mode using the determined weights to obtain a final predictor for the target block. All predictions are made using the first reference line, that is, the reference arrays immediately next to the target block.

As the DIMD modes are derived using the neighbouring reconstructed samples, but not the target block's information, the decoder can derive the same up to five best angular modes as the encoder and can compute the DIMD prediction as a weighted sum with the planar mode predictor. For each intra-coded block, a flag namely *DimdFlag* indicating whether a DIMD mode is to be applied or not is signalled.

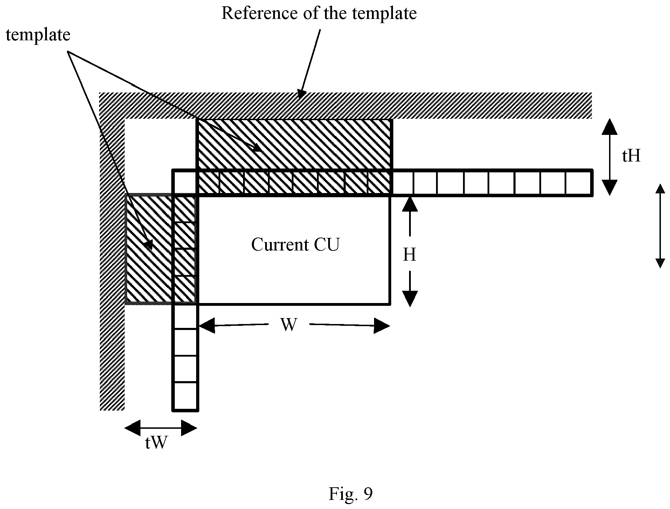

In TIMD, instead of explicitly signalling an intra prediction mode for a target block using a list of most probable modes (MPMs), the information is derived at both the encoder and the decoder from the neighbouring reconstructed samples of the target block. A template (indicated by a textured region in **Fig. 9**) specifies a set of already reconstructed samples, which are used to derive the intra prediction mode. The template size is denoted as the number of samples within the template that extends to the above and to the left of the target block. For example, a template size of "2" (i.e., $tW = 2$ or $tH = 2$ ) is used for 4x4 and 8x8 blocks and a template size of "4" (i.e., $tW = 4$ or $tH = 4$) is used for 16x16 and larger blocks. In cases, when the left (respectively the top) neighbour block of the target block is not available, the template consists of only the textured region on top (respectively on left) of the target block.

For each intra prediction mode in an MPM list, the decoder computes a prediction from a reference of the template (indicated in Fig. 9). For each prediction, a Sum of Absolute Transformed Differences (SATD) between the prediction and the original reconstructed samples of the template is calculated. In a first step, two initial intra prediction modes corresponding to the minimum SATD are selected. The first initial intra prediction mode with the lowest SATD is denoted

$$INIT_{IPM\,timd_{1st}}$$ and the initial intra prediction mode corresponding to the second lowest SATD is denoted

$$INIT_{IPM\,timd_{2nd}}$$ . In a second step, these two initial intra prediction modes are refined. For each of these two intra prediction modes, if the initial intra prediction mode is neither planar nor DC, a SATD is computed for the two closest extended angular modes (i.e., the two closest angular modes at sample resolution of (1/64)) of the initial angular mode. Two sets each comprising an initial angular mode (resulting from the first step) and two refined angular modes resulting from the refinement are therefore obtained. In each set, the angular mode minimizing the SATD is selected. The angular mode derived from the mode $INIT_{IPM\,timd_{1st}}$ is denoted $IPM_{timd1st}$ and the angular mode derived from the mode $INIT_{IPM\,timd_{2nd}}$ is denoted $IPM_{timd2nd}$. Thus, for TIMD, the set of intra prediction modes is extended from "65" to "129", by increasing the angle resolution to (1/64). If the SATD of the selected two angular modes satisfies the condition that $SATD_{IPM_{timd_{2nd}}} < 2 * SATD_{IPM_{timd1st}}$, the predictions of the target block obtained with these two angular modes are blended together with weights to get a final TIMD prediction for the target block. The first prediction using the mode $IPM_{timd1st}$ is obtained with the first reference line (the top and left reference arrays closest to a target block) whereas the second prediction the mode $IPM_{timd2nd}$ is obtained with the second reference line (the top and left reference arrays next to the closest). The weights are determined from relative magnitudes of the associated SATDs. Otherwise ( $SATD_{IPM_{timd_{2nd}}} \geq 2 * SATD_{IPM_{timd1st}}$ ), only the first angular mode $IPM_{timd1st}$ is used for the prediction of the target block as the TIMD mode. A dedicated flag called *timd_flag* is signaled by the encoder to indicate if the best prediction was obtained with the TIMD mode. Thus, if a decoder decodes a flag *timd_flag* equal to "1", then it derives the two TIMD modes $IPM_{timd1st}$ and $IPM_{timd2nd}$ exactly in the same manner as the encoder. Then, using the same SATD condition mentioned above, it decides to blend the two predictions or not. If the blending is performed, the blending weights are the same as used by the encoder. If *timd_flag* is decoded to be "0", then the decoder does not derive the TIMD modes.

The inter prediction consists of predicting the pixels of a target block from a block of pixels, referred to as the reference block, of a picture preceding or following the current picture, this picture being referred to as the reference picture. During the coding of a target block in accordance with the inter prediction method, a block of the reference picture closest, in accordance with a similarity criterion, to the target block is determined by a motion estimation step 304. During step 304, a motion vector indicating the position of the reference block in the reference picture is determined. Said motion vector is used during a motion compensation step 305 during which a residual block is calculated in the form of a difference between the target block and the reference block. In first video compression standards, the mono-directional inter prediction mode described above was the only inter mode available. As video compression standards evolve, the family of inter modes has grown significantly and comprises now many different inter modes, such as bi-prediction modes in which a current is predicted from two reference blocks designated by two different motion information.

When the target block is encoded according to an inter prediction, when appropriate, a process is applied to encode the motion information. The output of this process is then encoded by the entropic encoder during the step 310 in the video data 311.

Two processes are employed to encode the motion information: AMVP (Adaptive Motion Vector Prediction) or Merge. In each process, the motion information is predicted.

In an implementation of the AMVP mode, a motion vector predictor (MVP) is selected, and a motion vector difference noted MVd relative to the selected MVP is computed. The MVP is selected in a list of AMVP candidates. The index of the chosen MVP and the MVd are then encoded by the entropic encoder during step 310 along with the transformed and quantized residual block resulting from the inter prediction of the target block.

The AMVP candidate list is constructed first by deriving at least a first spatial candidate from a left block neighbouring the target block, if this block is available and inter coded. Then at least a second spatial candidate is derived from a top block neighbouring the target block, if this block is available and inter coded. Then, a temporal candidate is derived from the reference picture considered for the target block at a position collocated with the target block, if an inter block exist at this collocated position. Each derived MVP candidate is scaled according to a temporal distance between the reference picture associated to this MVP candidate and the reference picture considered for the target block. A redundancy check is then conducted between derived spatial candidates and, if a duplicate candidate exists, this candidate is discarded. The final AMVP candidate list contains *N* derived MVP candidates. If less than *Ns* (where Ns is a pre-determined number of candidates) MVP candidates are obtained through the above process, then the AMVP candidate list is completed with zero motion vectors.

The merge mode consists in deriving motion information for a target block from a selected motion information predictor candidate. The motion information considered here includes all the inter prediction parameters of a block, that is to say: the unidirectional or bi-directional temporal prediction type, the reference picture index within each reference picture list and the motion vector(s). A motion information predictor candidate (i.e., the merge candidate) is selected in a list of motion information predictor candidates (i.e., in a list of merge candidates). When the target block is encoded in merge mode, the index of the selected merge candidate is encoded. If no residual block is encoded for the target block, the target block is considered as encoded according to a particular merge mode called skip mode.

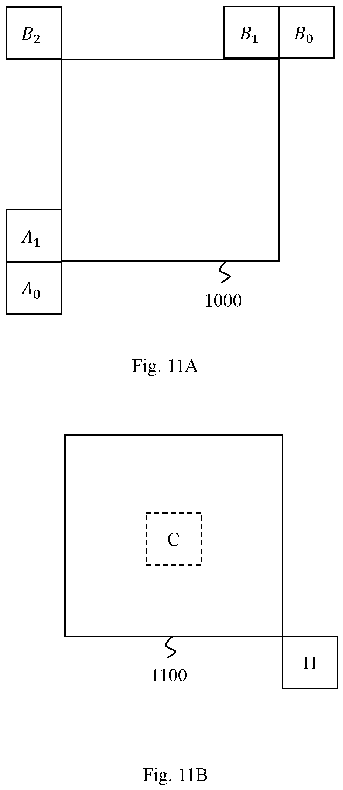

In some implementations, the list of merge candidates is systematically made of "5" merge candidates. Up to "5" spatial positions are considered to retrieve some potential candidates for the list of merge candidates. In the following, one will consider a simple example where the number of merge candidates is "5", but it can be easily extended to variants with more and/or different types of candidates. **Fig. 11A** illustrates schematically the five spatial positions considered for constructing a list of merge candidates. These positions are investigated according to the following order:

1. Left (A1)
2. Above (B1)
3. Above right (B0)
4. Left bottom (A0)
5. Above left (B2)

Each spatial candidates is introduced in the list of merge candidates provided that the motion information corresponding to this candidate is not already present in the list of merge candidates.

Then a temporal predictor noted TMVP is determined. **Fig. 11B** illustrates example of schematically collocated positions considered for determining the TMVP. The determination of the TMVP consists first in investigating position H and, if no motion information is available at position H, the position C is investigated.

A last pruning process may then applied to ensure that the set of spatial and temporal candidates does not contain redundant candidates.

In case of B-slice (slice allowing bi-predicted blocks), candidates of another type, called combined candidates, are introduced in the list of merge candidates if this list is not full.

Finally, if the merge list is still not full then zero motion vectors are introduced at the end of the merge list until it is full.

While in previous implementations of AMVP only spatial candidates, temporal candidates and the zero-motion vector candidate were considered for constructing the list of AMVP candidates, a new category of candidates, called HMVP (History-Based Motion Vector Prediction) candidates, was added in AMVP implementations adapted to the whole block-based motion representation.

A principle of HMVP candidates is to use previously coded motion vectors as MVPs. These motion vectors are associated with adjacent or non-adjacent blocks relative to a target block. To do so, a table of HMVP candidates (i.e., HMVP table) is maintained and updated on the fly, as a first-in-first-out (FIFO) buffer of MVPs. There are up to five candidates in the HMVP table. After coding one inter predicted block, provided that conditions are respected, the HMVP table is updated by appending the inter predicted block motion information to the end of the HMVP table as a new HMVP candidate. In addition to the usual FIFO rule, a mechanism to remove redundant HMVP candidates is applied. One can note that the HMVP table may be reset at each CTU row to enable parallel processing.

In recent implementations of the merge mode, the list of merge candidates was modified and three new merge modes were introduced.

The list of merge candidates is constructed with the following types of candidates: Spatial candidates, Temporal candidates, non-adjacent candidates, HMVP candidates (Several HMVP candidates may be inserted into the list of merge candidates so that the list reaches a maximum allowed number of merge candidates minus 1), Pairwise Average candidates (Up to one pairwise average candidate is added to the list of merge candidates. Pairwise candidates are computed as follows: The two first merge candidates present in the list of merge candidates are considered and their motion vectors are averaged. This averaging is computed separately for each reference picture list. If each of the two first merge candidates are bi-prediction ones, motion vectors related to both lists L0 and L1 are averaged. If only one motion vector is present, it is taken as is to form the pairwise candidate), virtual merge candidates, Zero motion vector candidate.

In ECM, a process of adaptive re-ordering of the motion candidates (ARMC) of the list of merge candidates based on template matching (TM) is applied. The template is made of the reconstructed samples above and left of the target block. The list of merge candidates described above is considered as an initial list. Then the candidates in the initial list are divided into several subgroups. Each merge candidate in the initial list may be firstly refined by using a TM based multi-pass DMVR (see below for more details on multi-pass DMVR for refinement). Merge candidates in each subgroup are reordered to generate a reordered merge candidate list and the reordering is according to cost values based on template matching (see below for cost values calculation). The index of selected merge candidate in the reordered merge candidate list is signalled to the decoder.

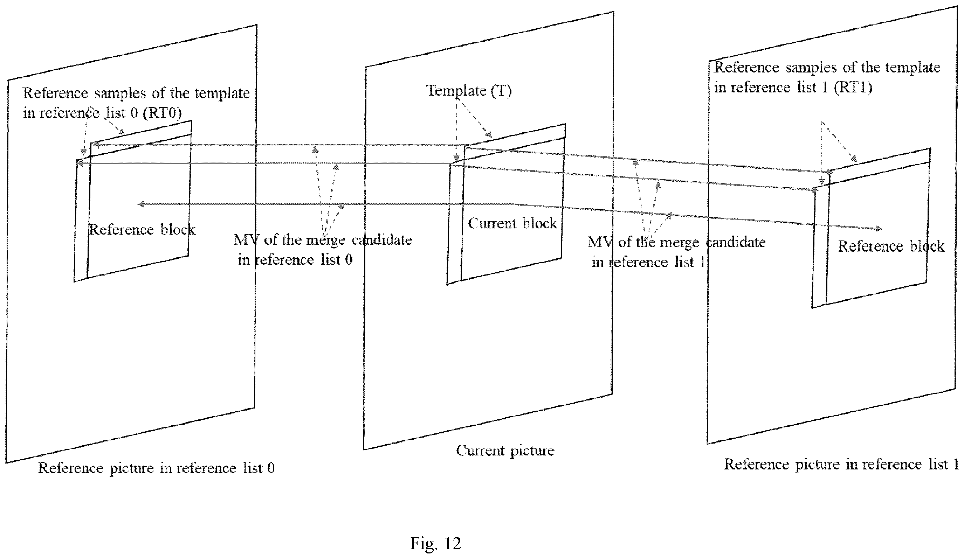

The template matching cost value of a merge candidate during the ARMC reordering process may be measured by a distortion function such as the SAD (sum of absolute differences) between samples of a template of the target block and reference samples of the template. The template comprises a set of reconstructed samples neighbouring the target block. Reference samples of the template are located by the motion information of the merge candidate. When a merge candidate utilizes bi-directional prediction, the reference samples of the template of the merge candidate are also generated by bi-prediction as shown in **Fig. 12.**

The TM based Multi-pass DMVR is used to refine the motion of the initial merge candidate list. In the multi-pass DMVR process several variations (called motion vector difference (MVD)) of the original motion vectors are iteratively tested on the template. Only the above or left template are used during the TM based motion refinement when the block is flat (i.e., the block width is greater than two times of block height) or narrow (i.e., the block height is greater than two times of the block width). One can note that the TM is configured to be applied with 1/16-pel MVD precision.

Hybrid prediction tools combining intra and inter prediction were also proposed. Combination intra-inter partition mode (CIIP) is an example of such hybrid tool. In CIIP mode, prediction samples are generated by weighting an inter prediction signal predicted using a CIIP-TM merge candidate (detailed later) and an intra prediction signal predicted using a TIMD derived intra prediction mode.

The TIMD derivation method is used to derive the intra prediction mode in CIIP. Specifically, the angular mode with the smallest SATD values in the TIMD mode list is selected and mapped to one of the "67" regular intra prediction modes.

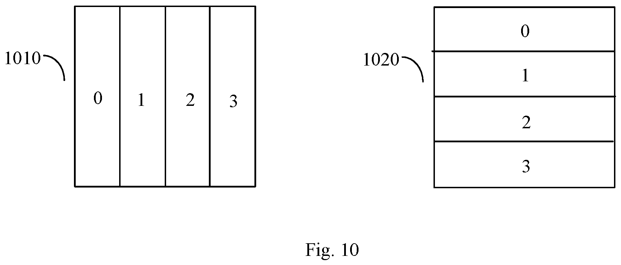

The intra and inter predictions are combined using weights ($wIntra$, $wInter$) respectively. The weights may be derived from the angular mode. For example, for near-horizontal modes ($2 <=$ angular mode index $< 34$), the target block is vertically divided as shown in **Fig. 10** (1010). For near-vertical modes ($34 <=$ angular mode index $<= 66$), the target block is horizontally divided as shown in Fig. 10 (1020).

The weights ($wIntra$, $wInter$) may be different for different sub-partition of the target block as shown in example of Table TAB1.

Table TAB1

| The sub-block index | (wIntra, wInter) |
|---|---|
| 0 | (6, 2) |
| 1 | (5, 3) |
| 2 | (3, 5) |
| 3 | (2, 6) |

A seen above, a CIIP-TM merge candidate is used for inter prediction. To obtain the CIIP-TM merge candidate, a CIIP-TM merge candidate list is build. The CIIP-TM merge candidate list is obtained by refining the list of merge candidates of the target block by template matching. The template corresponds to the reconstructed samples on the left and above the target block. The CIIP-TM merge candidates are also reordered by applying the ARMC method as for the regular merge candidates as described above. The CIIP-TM merge candidate applied for inter prediction in CIIP is, for example, the candidate of the CIIP-TM merge candidate list optimizing a distortion criterion.

During a selection step 306, the prediction mode optimising the compression performances, in accordance with a rate/distortion optimization criterion (i.e. RDO criterion), among the prediction modes tested (Intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal.

Note that the encoding module can bypass both transform and quantization, *i.e.,* the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream 311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the target block is reconstructed so that the pixels corresponding to that block can be used for future predictions. This reconstruction phase is also referred to as a *prediction loop.* An inverse quantization is therefore applied to the transformed and quantized residual block during a step 312 and an inverse transformation is applied during a step 313. According to the prediction mode used for the block obtained during a step 314, the predictor block of the block is reconstructed. If the target block is encoded according to an inter prediction mode, the encoding module applies, when appropriate, during a step 316, a motion compensation using the motion vector of the target block in order to identify the reference block of the target block. If the target block is encoded according to an intra prediction mode, during a step 315, the intra prediction mode selected for the target block is used for reconstructing the predictor block of the target block. The predictor block and the reconstructed residual block are added in order to obtain the reconstructed target block.

Following the reconstruction, an in-loop filtering intended to reduce the encoding artefacts is applied, during a step 317, to the reconstructed block. This filtering is called *in-loop filtering* since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

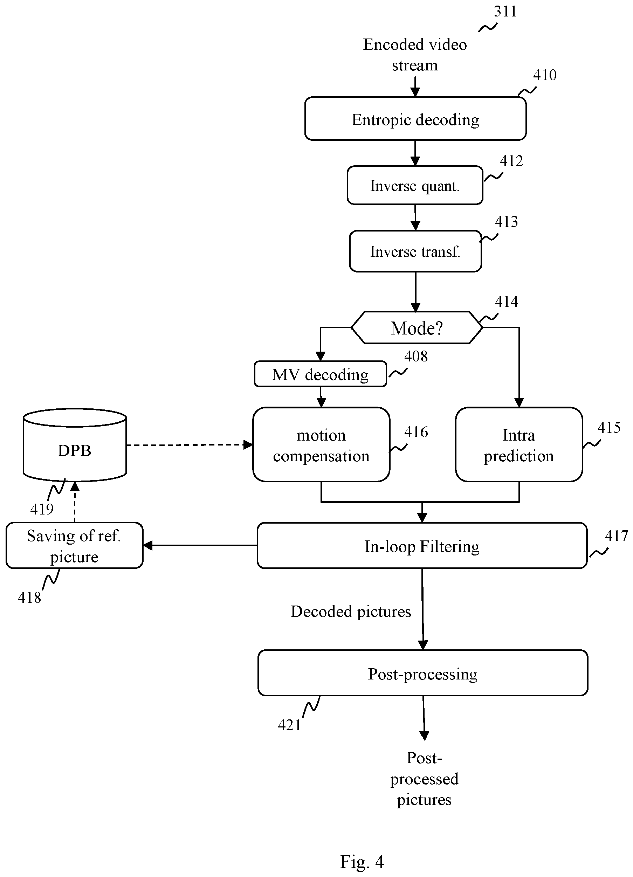

**Fig. 4** depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a target block, it starts with an entropic decoding of the target block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the target block using the prediction vector index and the motion residual.

If the block has been encoded according to a forward intra prediction mode entropy decoding allows obtaining a prediction mode and a prediction residual block. When the block has been encoded according to a backward intra prediction mode (DIMD, TIMD, etc) the intra prediction mode is not signalled but derived from already decoded samples. Steps 412, 413, 414, 415, 416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB 419 in a step 418. When the decoding module decodes a given picture, the pictures stored in the DPB 419 are identical to the pictures stored in the DPB 319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

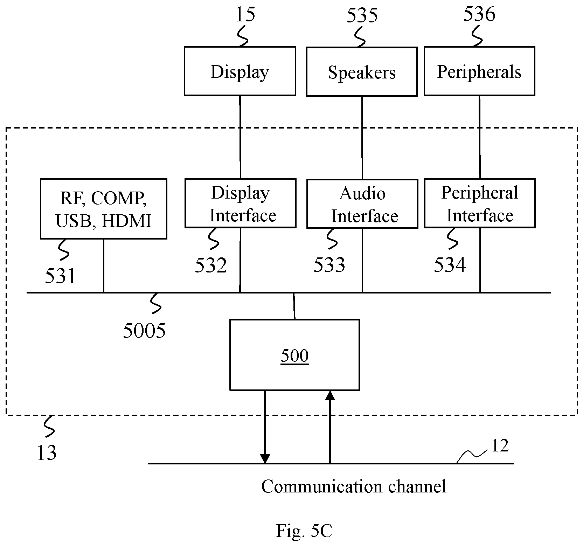

Fig. 5A, 5B and 5C describes examples of device, apparatus and/or system allowing implementing the various embodiments.

**Fig. 5A** illustrates schematically an example of hardware architecture of a processing module 500 able to implement an encoding module or a decoding module capable of implementing respectively a method for encoding of Fig. 3 and a method for decoding of Fig. 4 modified according to different aspects and embodiments. The encoding module is for example comprised in the system 11 when this system is in charge of encoding the video stream. The decoding module is for example comprised in the system 13.

The processing module 500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module 500 implements a decoding module, the communication interface 5004 enables for instance the processing module 500 to receive encoded video streams and to provide a sequence of decoded pictures. If the processing module 500 implements an encoding module, the communication interface 5004 enables for instance the processing module 500 to receive a sequence of original picture data to encode and to provide an encoded video stream.

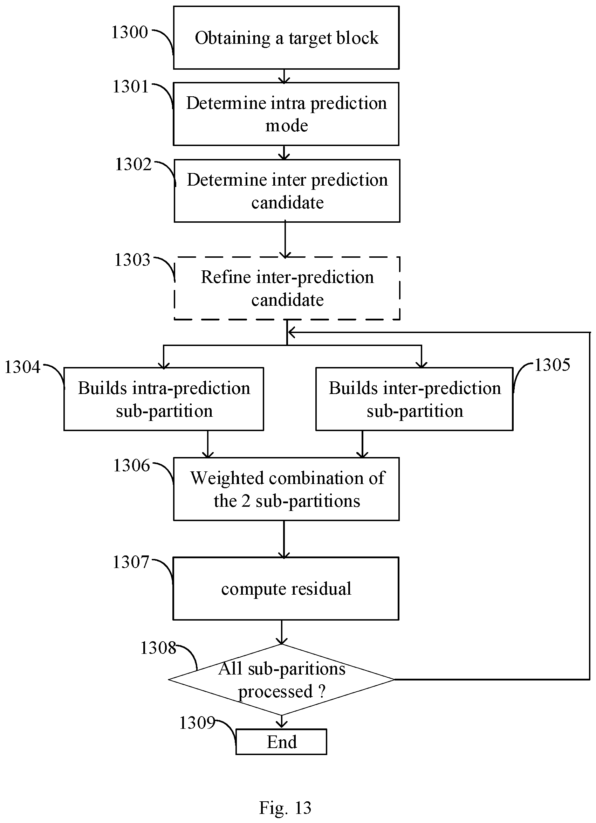

The processor 5000 is capable of executing instructions loaded into the RAM 5001 from the ROM 5002, from an external memory (not shown), from a storage medium, or from a communication network. When the processing module 500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig. 3, and methods illustrated in relation to Figs. 13 to 17, these methods comprising various aspects and embodiments described below in this document.

All or some of the algorithms and steps of the methods of Figs. 3, 4 and 13 to 17 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4 and 13 to 17.

**Fig. 5C** illustrates a block diagram of an example of the system 13 in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system 15, speakers 535, and other peripheral devices 536. The display system 15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), a head mounted display or other devices. The display system 15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system 15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12 in Fig. 5C via the communication interface 5004. The display system 15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system 15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, etc. In various embodiments, these data are raw data provided for example by a picture and/or audio acquisition module connected to the system 11 or comprised in the system 11. In that case, the processing module 500 take in charge the encoding of these

EP 4 629 615 A1

data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying a combination of CCIP with ISP according to an embodiment of this application.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a combination of CIIP with ISP according to an embodiment of this application.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

As can be seen from the description of ISP above, ISP uses intra prediction only and does not benefit of any inter-prediction, while it benefits of progressively reconstructed sub-partitions.

CIIP on its side benefits of inter prediction, but it does not benefit from progressively reconstructed sub-partitions.

In the following, various embodiments propose solutions for combining CIIP and ISP to leverage both on intra and inter predictions and progressively reconstructed sub-partitions.

In a first embodiment, the CIIP mode is modified by replacing the intra prediction of CIIP by intra sub-partition. The combination of CIIP with ISP is denoted *combined CIIP/ISP* mode in the following.

**Fig. 13** illustrates schematically a first embodiment of a method for encoding according to the combined CIIP/ISP mode.

The method of Fig. 13 is executed by the processing module 500 of the system 11 when the system 11 implements an encoder. For instance, the system 11 implements the encoder of Fig. 3.

In a step 1300, the processing module 500 obtains a target block to encode. The target block is partitioned in sub-partitions according to a partitioning direction. The number of sub-partitions is for example based on the size of the target block as in the regular ISP mode. The partitioning direction (horizontal or vertical) is determined based on a rate/distortion criterion as for the regular ISP mode and signaled in the bitstream (in the video data).

In a step 1301, the processing module 500, applies at least partially the TIMD process until obtaining an intra prediction mode for the target block. Specifically, the angular mode with the smallest SATD value determined by applying the TIMD process is selected and mapped to one of the "67" regular intra prediction mode.

In a step 1302, the processing module 500 determines a motion information predictor candidate for inter prediction of the target block applying the same method than in the regular CIIP mode. The motion information predictor candidate is the CIIP-TM merge candidate determined as described above in relation to the description of the regular CIIP mode.

After step 1302, the processing module loops on each sub-partition of the target block and applies steps 1304 to 1308 to each sub-partition of the target block. The sub-partitions are processed from the left to the right in case of horizontal partitioning or from the top to the bottom in case of vertical partitioning.

In a step 1304, the processing module 500 builds an intra prediction for a current sub-partition using the intra prediction mode determined for the current sub-partition (here, in the first embodiment, determined in step 1301). Here, the intra prediction in each sub-partition uses reconstructed samples neighboring the target block.

In a step 1305, the processing module 500 builds an inter prediction for the current sub-partition using the motion information predictor candidate for the current sub-partition (here, in the first embodiment, determined in step 1302).

In a step 1306, the processing module 500 computes a weighted average between the intra prediction and the inter prediction to generate a predictor for the current sub-partition. Identically to the regular CIIP, the weighting may be made with weights varying depending on the sub-partition position as proposed in Table TAB1.

In a step 1307, the processing module 500 determines a residual for the current sub-partition as a difference between the current sub-partition and its predictor. In step 1307, the sub-partition is therefore predicted by its predictor.

In a step 1308, the processing module 500 determines if all sub-partitions of the target block have been processed. If no, the processing module 500 returns to steps 1304 and 1305 to process another sub-partition of the target block.

If all sub-partitions of the target block have been processed, in a step 1309, the processing module 500 signals the use of the combined CIIP/ISP mode and encodes the residuals obtained in step 1307 if the combined CIIP/ISP mode offers the best rate/distortion performance for the target block.

In a variant, the motion information predictor candidate determined in step 1302 is refined in a step 1303 using the same or similar TM based Multi-pass DMVR process applied to the merge candidates of the initial list of merge candidates of the regular merge mode.

In another variant, in step 1301, the intra prediction mode is determined applying the DIMD process until obtaining the angular mode with highest cumulative magnitude in the HoG. The obtained angular mode is used as the intra prediction mode in the combined CIIP/ISP mode.

In another variant, in step 1301, the intra prediction mode optimizing a rate distortion criterion is selected and signaled in the bitstream (i.e., in video data).

In another variant, instead of using reconstructed samples neighboring the target block for intra prediction of sub-partitions of the target block, each sub-partition of the target block is reconstructed before processing the next sub-partition of the target block and reconstructed samples neighboring a current sub-partition of the target block of a previous sub-partition (when available) of the target block are used for intra prediction of the current sub-partition of the target block.

In another variant, the partitioning direction (vertical or horizontal) is derived from the intra prediction mode determined in step 1301. In that case, the partitioning of the target block in sub-partitions is performed after the determination of the intra prediction mode for the target block.

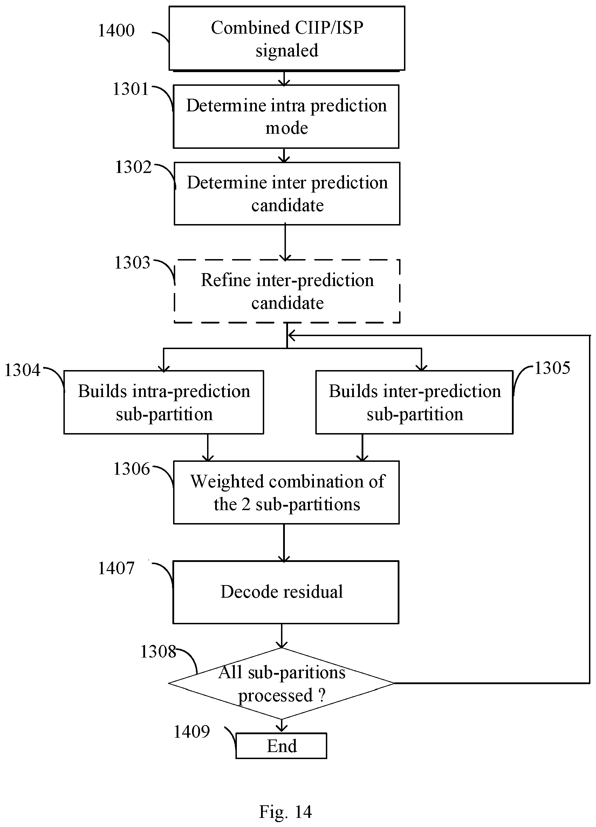

**Fig. 14** illustrates schematically a first embodiment of a method for decoding according to the combined CIIP/ISP mode.

The method of Fig. 14 is executed by the processing module 500 of the system 13 when the system 13 implements a decoder. For instance, the system 13 implements the decoder of Fig. 4.

In the process of Fig. 14, steps having the same reference number than in Fig. 13 remains identical.

Steps 1400, 1407 and 1409 replace respectively steps 1300, 1307 and 1309.

In a step 1400, the processing module 500 decodes an information from video data indicating that the combined CIIP/ISP mode applies to a target block. If the encoder has signaled an information indicating the partitioning direction of the target block, the processing module 500 decodes this information and partitions the target block according to this last information and, for example, to the block size.

In step 1407, the processing module 500 decodes a residual for the current sub-partition.

In step 1409, the processing module 500 reconstructs each sub-partition of the target block by combining the residual decoded for this sub-partition with the predictor obtained as a weighted average of the intra prediction obtained using the intra prediction mode determined in step 1301 and the inter prediction obtained using the motion information predictor candidate obtained in step 1302 computed in step 1306.

In a second embodiment, the motion information predictor candidate determined in step 1302 (or in step 1303 when step 1303 is applied) is refined for each sub-partition of the target block.

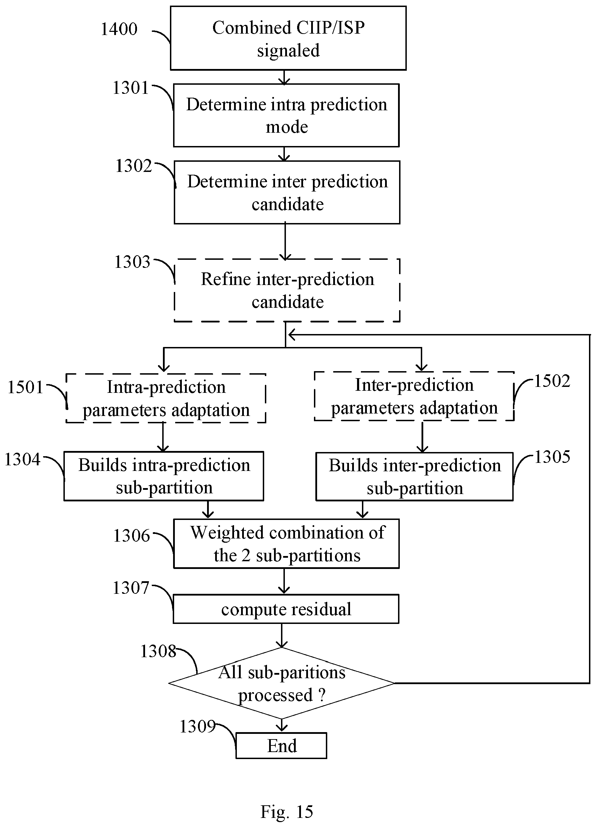

**Fig. 15** illustrates schematically a second embodiment of a method for encoding according to the combined CIIP/ISP mode.

The method of Fig. 15 is executed by the processing module 500 of the system 11 when the system 11 implements an encoder. For instance, the system 11 implements the encoder of Fig. 3.

The method of Fig. 15 is identical to the method of Fig. 13 except in that a step 1502 is introduced between step 1302 (or 1303 if applied) and 1305.

In step 1502, the processing module 500 refines the motion information predictor candidate obtained in step 1302 using the same or similar TM based Multi-pass DMVR process applied to the merge candidates of the initial list of merge candidates of the regular merge mode. Here the template is adapted to each sub-partition. For a current sub-partition of the target block, except for the left-most sub-partition in case of vertical partitioning or the top-most sub-partition in case of horizontal partitioning, the template of the current sub-partition comprises reconstructed samples neighboring the current sub-partition of the sub-partition processed before the current sub-partition.

In a variant of step 1502, the motion information predictor candidate obtained in step 1302 is not refined for the left-most sub-partition in case of vertical partitioning or for the top-most sub-partition in case of horizontal partitioning.

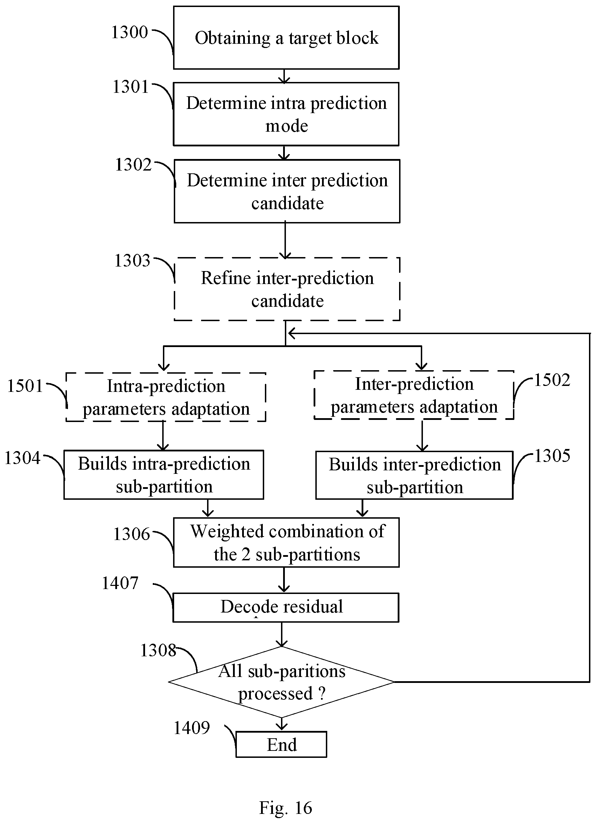

**Fig. 16** illustrates schematically a second embodiment of a method for decoding according to the combined CIIP/ISP mode.

The method of Fig. 16 is executed by the processing module 500 of the system 13 when the system 13 implements a decoder. For instance, the system 13 implements the decoder of Fig. 4.

The process of Fig. 16 is identical to the method of Fig. 14 except in that the step 1502 is introduced between step 1302 (or 1303 if applied) and 1305.

In a third embodiment, the intra prediction mode determined in step 1301 is adapted/modified before building the intra-prediction of each sub-partition.

The third embodiment is represented in Fig. 15 and 16 by the introduction of a step 1501 between step 1302 (or 1303 when applied), and step 1304.

Step 1501 is not applied to the left-most sub-partition in case of vertical partitioning or the top-most sub-partition in case of horizontal partitioning. Indeed, in that case, the processing module 500 uses the intra prediction mode determined in step 1301 for building the intra prediction in step 1304.

For other sub-partitions, step 1502 comprises applying at least partially the TIMD or DIMD process until obtaining an intra prediction mode for the target block as in step 1301. In that case, for a current sub-partition, the template used in TIMD and DIMD comprises reconstructed samples neighboring the current sub-partition of the sub-partition processed before the current sub-partition.

In a variant of the third embodiment, step 1501 is also applied to the left-most sub-partition in case of vertical partitioning or the top-most sub-partition in case of horizontal partitioning. In this variant, step 1301 is not applied. Template used for applying TIMD or DIMD to the top-most or left most sub-partition comprises only reconstructed samples neighboring the target block.

In another variant of the third embodiment, the index of the intra prediction mode *IM(s)* of a current sub-partition s of a target block depends on the index of the intra prediction mode *IM(s-1)* of the sub-partition *s-1* of the target block processed before the current sub-partition *s* if such partition exists. For example, the difference between the index *IM(s)* and the index *IM(s-1)* is below a threshold *thres.*

For example:

$$IM(s) = \begin{cases} IM(s) \geq IM(s-1) + thres\ then & IM(s) = IM(s-1) + thres \\ IM(s) < IM(s-1) - thres\ then & IM(s) = IM(s-1) - thres \\ \qquad\qquad else: & IM(s) \end{cases}$$

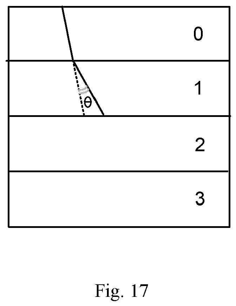

The value of threshold *thres* corresponds to a maximum allowed angle (Θ) direction adjustment for IM(s) compared to IM(s-1) as depicted in Fig. 17.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more information representative of the combined CIIP/ISP mode.
- Creating and/or transmitting and/or receiving and/or decoding a bitstream or signal that includes one or more information representative of the combined CIIP/ISP mode.
- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.
- A server, camera, cell phone, tablet or other electronic device that transmits (e.g. using an antenna) a signal over the air that includes an encoded video stream, and performs at least one of the embodiments described.

- A server, camera, cell phone, tablet or other electronic device that tunes (e.g. using a tuner) a channel to transmit a signal including an encoded video stream, and performs at least one of the embodiments described.

## Claims

1. A method comprising:

   obtaining (1300, 1400) a target block of a picture and partitioning the target block in a plurality of sub-partitions according to a partitioning direction;
   obtaining (1301, 1302, 1501, 1502) an intra prediction mode and a motion information predictor candidate for inter prediction for each sub-partition; and,
   for each sub-partition:

   building (1304) an intra prediction for the sub-partition using the intra prediction mode determined for this sub-partition;
   building (1305) an inter prediction for the sub-partition using the motion information predictor candidate determined for this sub-partition; and,
   computing (1306) a weighted average between the intra prediction and the inter prediction to generate a predictor for the sub-partition and predicting the sub-partition with the predictor.

2. The method of claim 1 wherein, for at least one sub-partition, the motion information predictor candidate is refined using a template matching based decoding side motion vector refinement process before being used for building the inter prediction.

3. The method of claim 1 or 2 wherein, the intra prediction mode obtained for at least one sub-partition results from applying at least partially a Template based Intra Mode Derivation process or a Decoder Side Intra mode Derivation process.

4. The method of claim 1, 2 or 3 wherein, for at least one sub-partition of the target block, the intra prediction of the sub-partition is built using reconstructed samples neighboring the sub-partition of a previous sub-partition of the target block.

5. The method of any previous claim wherein, the partitioning direction is derived from the intra prediction mode.

6. The method of any previous claim from claim 2 to 5 wherein, when applied to a current sub-partition, the template matching based decoding side motion vector refinement process uses a template comprising reconstructed samples neighboring the current sub-partition of the sub-partition of the target block processed before the current sub-partition.

7. The method of any previous claim wherein, an index of the intra prediction mode of a current sub-partition of the target block depends on an index of the intra prediction mode of the sub-partition of the target block processed before the current sub-partition.

8. The method of claim 7 wherein, responsive to a difference between the index of the intra prediction mode of the current sub-partition of the target block and the index of the intra prediction mode of the sub-partition of the target block processed before the current sub-partition is greater than a value, the index of the intra prediction mode of the current sub-partition is restricted so that the difference is equal to the value.

9. A method for encoding a picture comprising the method of any previous claim from claim 1 to 8.

10. A method for decoding a picture comprising the method of any previous claim from claim 1 to 8.

11. A device comprising electronic circuitry configured for:

    obtaining (1300, 1400) a target block of a picture and partitioning the target block in a plurality of sub-partitions according to a partitioning direction;
    obtaining (1301, 1302, 1501, 1502) an intra prediction mode and a motion information predictor candidate for inter prediction for each sub-partition; and,

for each sub-partition:

building (1304) an intra prediction for the sub-partition using the intra prediction mode determined for this sub-partition;
building (1305) an inter prediction for the sub-partition using the motion information predictor candidate determined for this sub-partition; and,
computing (1306) a weighted average between the intra prediction and the inter prediction to generate a predictor for the sub-partition and predicting the sub-partition with the predictor.

12. A device comprising electronic circuitry configured for applying the method of claim 9 or the method of claim 10.

13. Non-transitory information storage medium storing program code instructions for implementing the method according to any previous claim from claim 1 to 10.

14. A signal comprising video data generated by the method of claim 9 or by the device of claim 12.

15. A computer program comprising program code instructions for implementing the method according to any previous claim from claim 1 to 10.

Fig. 1

Fig. 2

Fig. 3

Fig. 4

5000
CPU

5001
RAM

5002
ROM

5005

5003

5004

500

Fig. 5A

RF, COMP,
USB, HDMI

531

5005

500

11

12

Communication channel

Fig. 5B

15      535      536

| Display | Speakers | Peripherals |

| RF, COMP, USB, HDMI | Display Interface | Audio Interface | Peripheral Interface |

531      532      533      534

5005

**500**

13

12

Communication channel

Fig. 5C

Fig. 6

EP 4 629 615 A1

Current CU

DIMD HoG

Fig. 7

```
        ┌─────────────────┐
        │    Obtaining    │ ⌇ 80
        │  current block  │
        └─────────────────┘
                 │
                 ▼
    ┌─────────────────────────┐
    │   Obtaining neighboring │ ⌇ 81
    │  reconstructed reference│
    │         samples         │
    └─────────────────────────┘
                 │
                 ▼
        ┌─────────────────┐
        │      HoG        │ ⌇ 82
        │   derivation    │
        └─────────────────┘
                 │
                 ▼
        ┌─────────────────┐
        │   DIMD modes    │ ⌇ 83
        └─────────────────┘
                 │
                 ▼
        ┌─────────────────┐
        │     Weights     │ ⌇ 84
        │   derivation    │
        └─────────────────┘
                 │
                 ▼
        ┌─────────────────┐
        │ Determination of│ ⌇ 85
        │    predictor    │
        └─────────────────┘
```

Fig. 8

Fig. 9

1010

0 | 1 | 2 | 3

1020

0

1

2

3

Fig. 10

$B_2$

$B_1$ $B_0$

$A_1$

$A_0$

1000

Fig. 11A

C

1100

H

Fig. 11B

Fig. 12

EP 4 629 615 A1

Fig. 13

Fig. 14

1400 — Combined CIIP/ISP
signaled

1301 — Determine intra prediction
mode

1302 — Determine inter prediction
candidate

1303 — Refine inter-prediction
candidate

1501 — Intra-prediction
parameters adaptation

1502 — Inter-prediction
parameters adaptation

1304 — Builds intra-prediction
sub-partition

1305 — Builds inter-prediction
sub-partition

1306 — Weighted combination of
the 2 sub-partitions

1307 — compute residual

1308 — All sub-paritions
processed ?

1309 — End

Fig. 15

1300 — Obtaining a target block

1301 — Determine intra prediction mode

1302 — Determine inter prediction candidate

1303 — Refine inter-prediction candidate

1501 — Intra-prediction parameters adaptation

1502 — Inter-prediction parameters adaptation

1304 — Builds intra-prediction sub-partition

1305 — Builds inter-prediction sub-partition

1306 — Weighted combination of the 2 sub-partitions

1407 — Decode residual

1308 — All sub-paritions processed ?

1409 — End

Fig. 16

Fig. 17

Europäisches Patentamt
European Patent Office
Office européen des brevets

## EUROPEAN SEARCH REPORT

**Application Number**

EP 24 30 5505

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/412818 A1 (BLASI SAVERIO [GB] ET AL) 21 December 2023 (2023-12-21) | 1,9-15 | INV. H04N19/103 |
| Y | * paragraph [0002] * | 2-7 | H04N19/119 |
| A | * paragraph [0040] - paragraph [0041] * | 8 | H04N19/159 |
| | * paragraph [0088] - paragraph [0095] * | | H04N19/176 |
| | - - - - - | | H04N19/513 |
| Y | WO 2023/140635 A1 (WILUS INST STANDARDS & TECH INC [KR]) 27 July 2023 (2023-07-27) | 2-4,6 | H04N19/593 |
| | * paragraph [0142] - paragraph [0143] * | | |
| | * paragraph [0155] * | | |
| | * paragraph [0160] * | | |
| | - - - - - | | |
| Y | EP 3 276 958 A1 (LG ELECTRONICS INC [KR]) 31 January 2018 (2018-01-31) | 5 | |
| | * paragraph [0063] * | | |
| | - - - - - | | |
| Y | US 2022/124372 A1 (DE LUXÁN HERNÁNDEZ SANTIAGO [DE] ET AL) 21 April 2022 (2022-04-21) | 7 | |
| | * paragraph [0272] * | | |
| | - - - - - | | |

**TECHNICAL FIELDS SEARCHED (IPC)**

H04N

The present search report has been drawn up for all claims

| Place of search | Date of completion of the search | Examiner |
|---|---|---|
| Munich | 16 September 2024 | Regidor Arenales, R |

EPO FORM 1503 03.82 (P04C01)

## ANNEX TO THE EUROPEAN SEARCH REPORT
## ON EUROPEAN PATENT APPLICATION NO.

EP 24 30 5505

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | Publication date | Patent family member(s) | | Publication date |
|---|---|---|---|---|
| US 2023412818 A1 | 21-12-2023 | CN | 113228679 A | 06-08-2021 |
| | | EA | 202191811 A1 | 14-09-2021 |
| | | EP | 3903497 A1 | 03-11-2021 |
| | | GB | 2580326 A | 22-07-2020 |
| | | KR | 20210128385 A | 26-10-2021 |
| | | US | 2022103833 A1 | 31-03-2022 |
| | | US | 2023412818 A1 | 21-12-2023 |
| | | WO | 2020136365 A1 | 02-07-2020 |
| WO 2023140635 A1 | 27-07-2023 | NONE | | |
| EP 3276958 A1 | 31-01-2018 | CN | 107409207 A | 28-11-2017 |
| | | CN | 111885379 A | 03-11-2020 |
| | | CN | 111885380 A | 03-11-2020 |
| | | CN | 111885381 A | 03-11-2020 |
| | | EP | 3276958 A1 | 31-01-2018 |
| | | KR | 20170126918 A | 20-11-2017 |
| | | KR | 20200097825 A | 19-08-2020 |
| | | KR | 20210054050 A | 12-05-2021 |
| | | KR | 20220009502 A | 24-01-2022 |
| | | KR | 20220074995 A | 03-06-2022 |
| | | KR | 20230088846 A | 20-06-2023 |
| | | US | 2018098074 A1 | 05-04-2018 |
| | | US | 2020084455 A1 | 12-03-2020 |
| | | US | 2021112255 A1 | 15-04-2021 |
| | | US | 2023232018 A1 | 20-07-2023 |
| | | WO | 2016153146 A1 | 29-09-2016 |
| US 2022124372 A1 | 21-04-2022 | BR | 112021026257 A2 | 03-03-2022 |
| | | CN | 114097223 A | 25-02-2022 |
| | | EP | 3991407 A1 | 04-05-2022 |
| | | JP | 7535068 B2 | 15-08-2024 |
| | | JP | 2022538160 A | 31-08-2022 |
| | | KR | 20220037434 A | 24-03-2022 |
| | | TW | 202110192 A | 01-03-2021 |
| | | US | 2022124372 A1 | 21-04-2022 |
| | | WO | 2020260313 A1 | 30-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- JVET AF2025: Algorithm description of Enhanced Compression Model 11 (ECM 11) / Joint Video Experts Team (JVET) of ITU-T SG 16 WP 3 and ISO/IEC JTC 1/SC 29. *32nd Meeting, Hannover, DE*, 13 October 2023